# FASCICULE DE BREVET EUROPEEN

(11) **EP 3 450 279 B1**
(45) Date de publication et mention de la délivrance du brevet: **04.11.2020**
(21) Numéro de dépôt: 18191280.9
(22) Date de dépôt: 28.08.2018
(51) Int. Cl.: B61D 17/12, B61C 3/00, H02G 3/04, H02G 3/30, H02G 3/34

(54) **MOTRICE DE VÉHICULE FERROVIAIRE ET PROCÉDÉ DE MONTAGE D'UN FAISCEAU ÉLECTRIQUE DANS UNE TELLE MOTRICE**
ANTRIEBSANLAGE FÜR EIN SCHIENENFAHRZEUG, UND MONTAGEVERFAHREN EINES ELEKTRISCHEN KABELBÜNDELS IN EINER SOLCHEN ANTRIEBSANLAGE
RAIL VEHICLE DRIVE AND METHOD FOR MOUNTING AN ELECTRICAL HARNESS IN SUCH A DRIVE

(30) Priorité: 28.08.2017 FR 1757912
(43) Date de publication de la demande: 06.03.2019
(73) Titulaire: ALSTOM Transport Technologies, 93400 Saint-Ouen (FR)
(72) Inventeur: DEBOST, Pierre, 92230 GENNEVILLIERS (FR); JARDON, Pascal, 90300 ELOIE (FR)
(74) Mandataire: Lavoix

(56) Documents cités:
- EP-A1- 2 957 476
- DE-A1-102007 059 706
- DE-A1-102013 210 333
- RU-C1- 2 585 931

## Description

La présente invention concerne une motrice de véhicule ferroviaire ainsi qu'un procédé de montage d'un faisceau électrique dans une telle motrice.

Les modèles de motrices de véhicules ferroviaires actuels, notamment pour les trains à grande vitesse, sont équipés de chemins de câblage basse tension situés en hauteur au-dessus de deux couloirs latéraux le long des parois latérales de la motrice, et sur trois passages de câbles transversaux. La mise en place de ces câblages implique de nombreuses heures de montage sur les motrices, sur la ligne d'assemblage sur le site même de la construction de la motrice, et une ergonomie de travail insatisfaisante pour les opérateurs.

Il est connu de US 2012/102846 de mettre en place des chemins de câblage dans des voitures pour véhicules ferroviaires, dans des espaces en hauteur au-dessus d'un corridor central des compartiments passagers, et masqués par des plaques de plafond. De part et d'autre des chemins de câblage se trouvent des gaines de climatisation. Cette structure ne favorise pas l'accès aux câblages par des opérateurs.

DE 10 2013 210 333 décrit une voiture de véhicule ferroviaire pour le transport de passagers, comprenant une structure de toit délimitant un espace au-dessus d'un plafond d'un compartiment passager. Dans l'espace sous le toit, un ensemble conducteur est installé. Cet ensemble comprend des pistes conductrices fixées de manière non amovible dans des plaques de matériau isolant. Cet ensemble conducteur n'est pas modifiable, et installé comme tel sur de grandes longueurs le long des voitures. Cet ensemble conducteur n'offre pas d'accès réel par les côtés longitudinaux, supérieur ou inférieur, car les plaques de matériau isolant ne sont pas démontables des conducteurs.

C'est à ces inconvénients qu'entend remédier l'invention en proposant une nouvelle motrice de véhicule ferroviaire, dans laquelle l'accessibilité des faisceaux électriques est améliorée, et facilite les opérations de câblage.

A cet effet, l'invention concerne une motrice de véhicule ferroviaire comprenant un corridor central s'étendant selon un axe longitudinal de la motrice, séparant deux compartiments techniques latéraux ; une structure de toit s'étendant au-dessus du corridor central et des compartiments techniques latéraux et une structure de caisse supportant la structure de toit. La motrice de véhicule ferroviaire est caractérisée en ce qu'elle comprend en outre un ensemble de support de faisceau électrique, fixé sous la structure de caisse au-dessus du corridor central et sous la structure de toit, et au moins un faisceau électrique fixé dans l'ensemble de support, en ce que l'ensemble de support a des côtés longitudinaux ouverts à travers lesquels sont guidés des câbles du faisceau électrique vers les compartiments techniques latéraux, et en ce que l'ensemble de support est accessible par des côtés longitudinaux supérieur et inférieur.

Grâce à l'invention, des opérateurs peuvent facilement accéder aux câblages du faisceau électrique par les côtés et par-dessus ou par-dessous, ce qui facilite l'installation, les ajouts de câblage et d'équipements, ainsi que la maintenance.

Selon des aspects avantageux mais non obligatoires de l'invention, une telle motrice peut incorporer une ou plusieurs des caractéristiques suivantes, prises dans tout combinaison techniquement admissible :
- Le faisceau électrique monté dans l'ensemble de support est un faisceau électrique basse tension.
- L'ensemble de support comprend un caniveau accueillant le faisceau électrique et des éléments de fixation fixés à la structure de caisse de la motrice.
- Le faisceau électrique est inséré dans un conduit monté dans le caniveau, ce conduit présentant des ouvertures latérales de sortie des câbles du faisceau électrique.

L'invention concerne également un procédé de montage d'un faisceau électrique dans une motrice de véhicule ferroviaire comprenant un corridor central séparant deux compartiments techniques latéraux, une structure de caisse et une structure de toit. Ce procédé est caractérisé en ce qu'il comprend des étapes consistant à :
- a) monter le faisceau électrique dans un caniveau d'un ensemble de support;
- b) monter l'ensemble de support équipé du faisceau électrique sous la structure de toit entre les deux compartiments techniques latéraux et à le fixer sous la structure de caisse;
- c) raccorder le faisceau électrique à des équipements électriques de la motrice localisés dans les compartiments latéraux.

Grâce à l'invention, la mise en place des faisceaux électriques peut être faite en dehors de la motrice, y compris sur un autre site, ce qui permet une sensible amélioration des temps et des coûts de fabrication.

Selon un aspect avantageux mais non obligatoire de l'invention, le montage est réalisé au sol.

L'invention sera mieux comprise et d'autres avantages de celle-ci apparaitront plus clairement à la lumière de la description qui va suivre d'une motrice et d'un procédé de montage conformes à son principe, faite à titre d'exemple non limitatif en référence aux dessins annexés dans lesquels :
- La figure 1 est une coupe transversale d'une motrice conforme à l'invention ;
- La figure 2 est une vue à plus grande échelle du détail II à la figure 1 ;

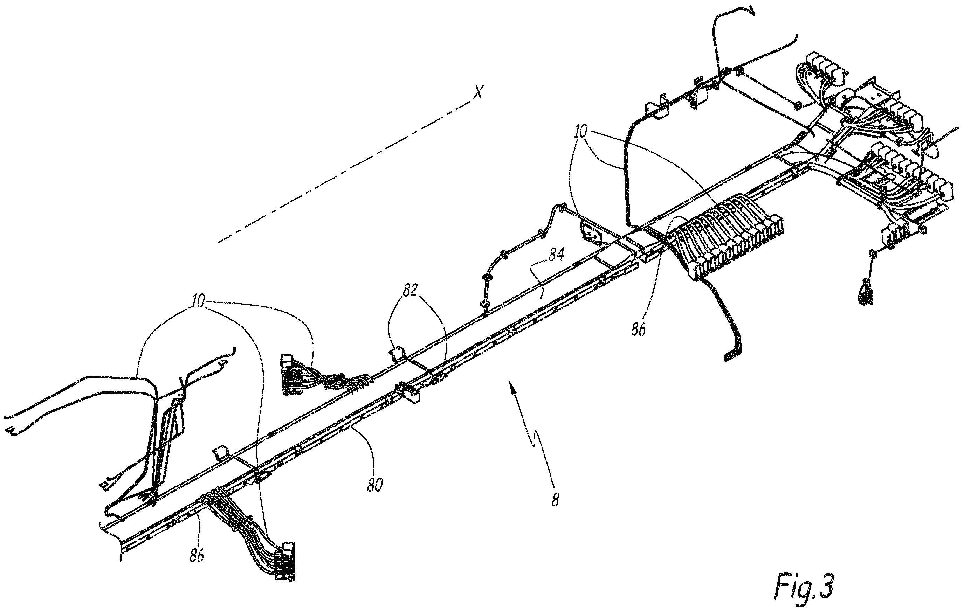

- La figure 3 est une vue en perspective d'une partie d'un faisceau électrique et d'un ensemble de support de la motrice de la figure 1 ;

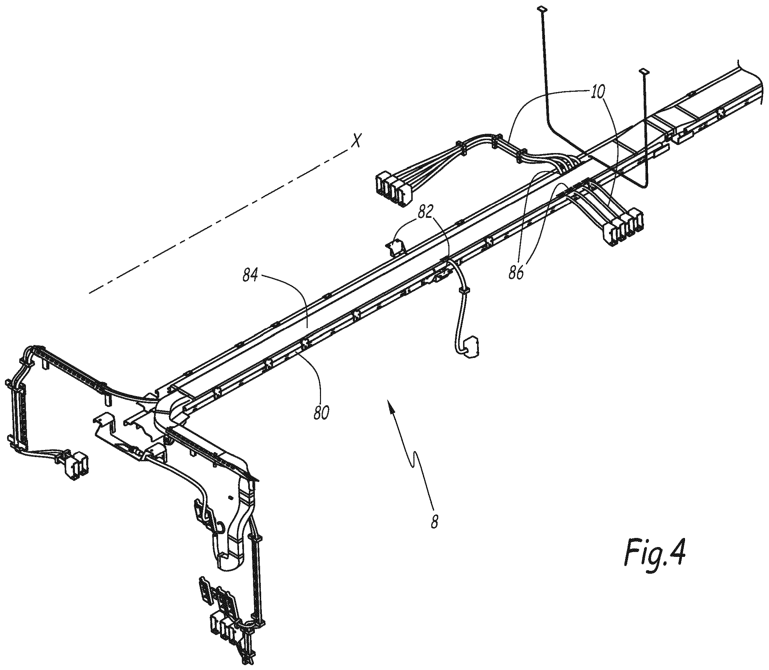

- La figure 4 est une vue d'une autre partie du faisceau électrique et de l'ensemble de support de la figure 3.

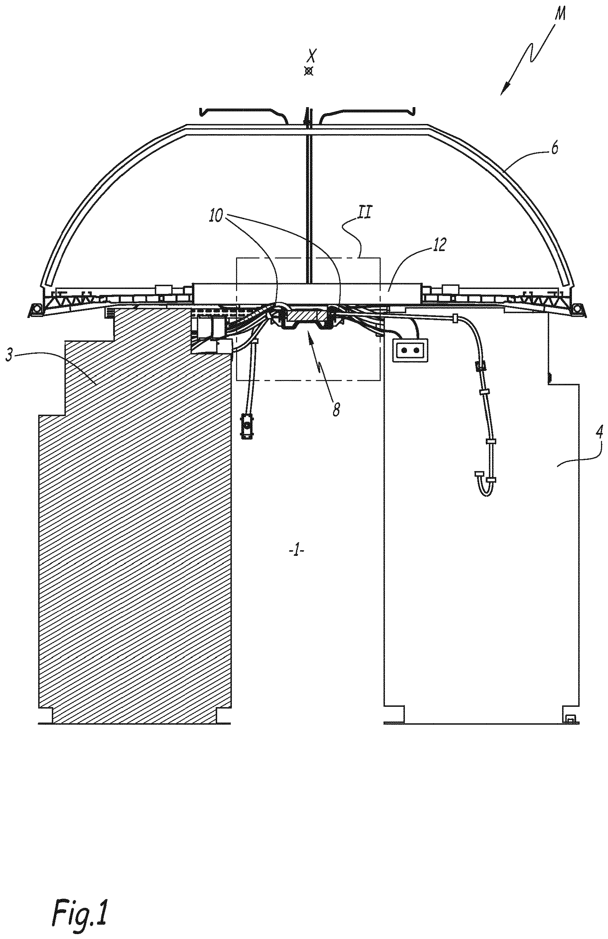

La figure 1 représente une motrice M de véhicule ferroviaire. Cette motrice M s'étend selon un axe longitudinal X. La motrice M comprend un corridor central 1 s'étendant selon l'axe longitudinal X. La motrice M comprend également deux compartiments techniques latéraux 3 et 4, au milieu desquels se trouve le corridor central 1, qui sépare les deux compartiments 3 et 4. Les compartiments techniques latéraux 3 et 4 contiennent différents équipements électriques ou pneumatiques.

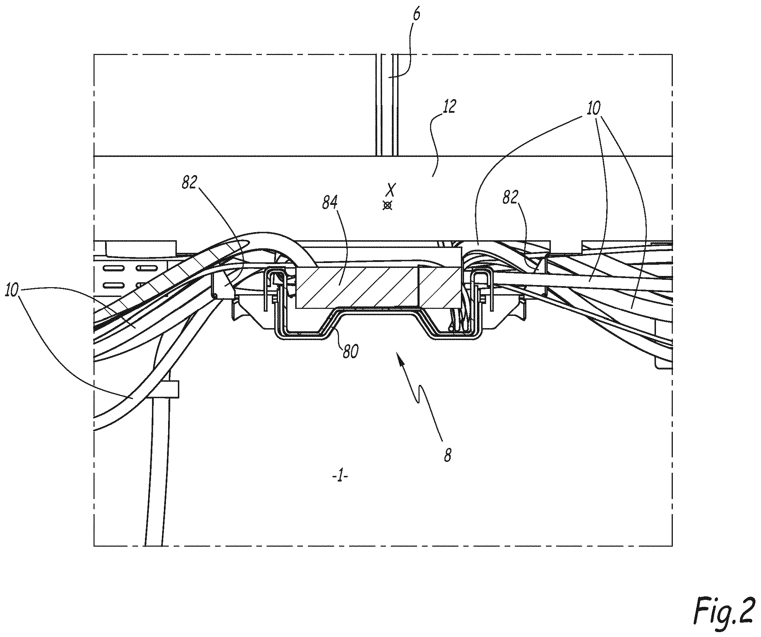

La motrice M comprend une structure de caisse 12 représentée notamment par une barre transversale à la figure 2. La structure de caisse 12 forme l'ossature de la motrice M et supporte notamment les équipements des compartiments 3 et 4.

La motrice M comprend également une structure de toit 6 s'étendant au-dessus du corridor central 1 et des compartiments techniques latéraux 3 et 4. La structure de toit 6 est fixée sur la structure de caisse 12, qui la supporte. La motrice M comprend en outre un ensemble de support 8 de faisceau électrique, fixé sur la structure de caisse 12 au-dessus du corridor central 1 et sous la structure de toit 6, et au moins un faisceau électrique 10 fixé dans l'ensemble de support 8. Ce faisceau électrique 10 comprend une pluralité de câbles électriques de différents types adaptés à l'alimentation électrique ou à la transmission de signaux électriques pour le fonctionnement de la motrice M et du véhicule ferroviaire auquel elle appartient. De préférence, le faisceau électrique 10 monté dans l'ensemble de support 8 est un faisceau électrique basse tension.

L'ensemble de support 8 comprend des séparations verticales pour séparer les diverses classes de câbles basse tension en fonction de leur compatibilité électromagnétique.

L'ensemble de support 8 a des côtés longitudinaux ouverts à travers lesquels sont guidés des câbles du faisceau électrique 10 vers les compartiments techniques latéraux 3 et 4. L'ensemble de support 8 est accessible par des côtés longitudinaux supérieur et inférieur. L'ensemble de support 8 est espacé latéralement des compartiments techniques latéraux 3 et 4.

Ainsi, des opérateurs peuvent accéder aux câbles et aux connexions du faisceau électrique 10 par en-dessous, à partir du corridor 1, sur les côtés de l'ensemble de support 8, et par le dessus, du côté de la structure de toit 6.

L'ensemble de support 8 comprend un caniveau 80 accueillant le faisceau électrique 10 et des éléments de fixation 82.

Le faisceau électrique 10 est inséré dans un conduit 84 monté dans le caniveau 80, ce conduit 84 présentant des ouvertures latérales 86 de sortie des câbles du faisceau électrique 10. Le conduit 84 présente une forme globalement parallélépipédique englobant les câbles du faisceau électrique 10.

L'ensemble de support 8 est fixé à un élément de la structure de la caisse 12 de la motrice M. Les éléments de fixation 82 sont fixés sur la structure de la caisse 12. La structure de toit 6 est vissée sur des éléments de la structure de la caisse 12.

Les fixations 82 s'étendent vers le haut et latéralement, et sont espacées le long de l'axe longitudinal X, de sorte que de la place est libérée pour des opérateurs pour manipuler des câbles et effectuer des connexions, sans nécessiter le démontage d'éléments de la motrice M. Un opérateur peut notamment facilement ajouter des câbles ou des équipements.

Un opérateur peut accéder aux câbles sans démonter de plafond, ni ôter de pièces de la structure de toit 6.

Le procédé de montage du faisceau électrique 10 dans la motrice M se déroule selon les étapes suivantes. La première étape consiste à monter le faisceau électrique 10 dans le caniveau 80 de l'ensemble de support 8, préalablement au montage de l'ensemble de support 8 dans la motrice M. Avantageusement, le montage du faisceau électrique 10 est réalisé au sol, ce qui réduit le temps de travail sur la ligne de montage de la motrice M. Cela permet de préparer le câblage indifféremment sur le site d'assemblage de la motrice ou bien sur un site externe. L'ensemble de support 8 équipé du faisceau électrique 10 peut notamment être amené par camion sur le site de montage des motrices. Cela permet également le limiter le temps de fabrication de la motrice M. Les éventuelles opérations de test diélectrique et de vérification des câblages peuvent donc également être réalisées au sol préalablement au levage de l'ensemble de support 8.

Le montage du faisceau 10 peut également consister en l'équipement en connecteurs terminaux de l'extrémité des câbles.

Ensuite, l'ensemble de support 8 équipé du faisceau électrique 10 est monté et fixé sous la structure de caisse 12 entre les deux compartiments techniques latéraux 3 et 4. Cette étape est réalisée en une seule opération, à l'aide d'un engin de levage tel qu'un pont roulant, dont le nombre d'utilisations est donc réduit.

Enfin, le faisceau électrique 10 est raccordé à des équipements électriques non représentés de la motrice M, localisés dans les compartiments latéraux 3 et 4 ou en partie supérieure de ceux-ci. Ce raccordement tire avantage du pré-câblage du faisceau électrique 10 dans l'ensemble de support 8, les sorties de câbles étant déjà prêtes aux emplacements adaptés et les connecteurs terminaux étant déjà présents. Cette étape peut donc être réalisée rapidement, ce qui améliore l'ergonomie de travail des opérateurs et limite le temps de travail en hauteur et sur la motrice.

## Revendications

1. Motrice (M) de véhicule ferroviaire comprenant :
- un corridor central (1) s'étendant selon un axe longitudinal (X) de la motrice (M), séparant deux compartiments techniques latéraux (3, 4),
- une structure de toit (6) s'étendant au-dessus du corridor central (1) et des compartiments techniques latéraux (3, 4),
- une structure de caisse (12) supportant la structure de toit (6),
**caractérisée en ce qu'**elle comprend un ensemble de support (8) de faisceau électrique, fixé sous la structure de caisse (12) au-dessus du corridor central (1) et sous la structure de toit (6), et au moins un faisceau électrique (10) fixé dans l'ensemble de support (8),
**en ce que** l'ensemble de support (8) a des côtés longitudinaux ouverts à travers lesquels sont guidés des câbles du faisceau électrique (10) vers les compartiments techniques latéraux (3, 4), et
**en ce que** l'ensemble de support (8) est accessible par des côtés longitudinaux supérieur et inférieur.

2. Motrice selon la revendication 1, **caractérisée en ce que** le faisceau électrique (10) monté dans l'ensemble de support (8) est un faisceau électrique basse tension.

3. Motrice selon l'une des revendications précédentes, **caractérisée en ce que** l'ensemble de support (8) comprend un caniveau (80) accueillant le faisceau électrique (10) et des éléments de fixation (82) fixés à la structure de caisse (12) de la motrice (M).

4. Motrice selon la revendication 3, **caractérisée en ce que** le faisceau électrique (10) est inséré dans un conduit (84) monté dans le caniveau (80), ce conduit (84) présentant des ouvertures latérales (86) de sortie des câbles du faisceau électrique (10).

5. Procédé de montage d'un faisceau électrique dans une motrice (M) de véhicule ferroviaire comprenant un corridor central (1) séparant deux compartiments techniques latéraux (3, 4), une structure de caisse (12) et une structure de toit (6), **caractérisé en ce qu'**il comprend des étapes consistant à :
- a) monter le faisceau électrique (10) dans un caniveau (80) d'un ensemble de support (8);
- b) monter l'ensemble de support (8) équipé du faisceau électrique (10) sous la structure de toit (6) entre les deux compartiments techniques latéraux (3, 4) et à le fixer sous la structure de caisse (12);
- c) raccorder le faisceau électrique (10) à des équipements électriques de la motrice (M) localisés dans les compartiments latéraux (3, 4).

6. Procédé de montage selon la revendication 5, **caractérisé en ce que** le montage du faisceau électrique (10) à l'étape a) est réalisé au sol.

## Patentansprüche

1. Schienenfahrzeug-Triebwagen (M), aufweisend:
- einen zentralen Korridor (1), der sich entlang einer Längsachse (X) des Triebwagens (M) erstreckt und der zwei seitliche Technik-Abteile (3, 4) trennt,
- eine Dachstruktur (12), die sich über dem zentralen Korridor (1) und den seitlichen Technik-Abteilen (3, 4) erstreckt,
- eine Kastenstruktur (12), die die Dachstruktur (6) hält, **dadurch gekennzeichnet, dass** er aufweist eine Einrichtung zum Halten (8) eines elektrischen Kabelstrangs, die unter der Kastenstruktur (12) über dem zentralen Korridor (1) und unter der Dachstruktur (6) befestigt ist, und wenigstens einen elektrischen Kabelstrang (10), der in der Einrichtung zum Halten (8) befestigt ist,
dass die Einrichtung zum Halten (8) offene Längsseiten hat, durch welche hindurch Kabel des elektrischen Kabelstrangs (10) hin zu den seitlichen Technik-Abteilen (3, 4) geführt sind, und
dass die Einrichtung zum Halten (8) zugänglich ist über eine obere und eine untere Längsseite.

2. Triebwagen gemäß Anspruch 1, **dadurch gekennzeichnet, dass** der elektrische Kabelstrang (10), der in der Einrichtung zum Halten (8) montiert ist, ein Niederspannung-elektrischer-Kabelstrang ist.

3. Triebwagen gemäß einem der vorhergehenden Ansprüche, **dadurch gekennzeichnet, dass** die Einrichtung zum Halten (8) aufweist einen Kabelkanal (8), welcher den elektrischen Kabelstrang (10) aufnimmt, und Befestigungselemente (82), die an der Kastenstruktur (12) des Triebwagens (M) befestigt sind.

4. Triebwagen gemäß Anspruch 3, **dadurch gekennzeichnet, dass** der elektrische Kabelstrang (10) in einen Kabeltunnel (84) eingesetzt ist, der in dem Kabelkanal (80) montiert ist, wobei dieser Kabeltunnel (84) seitliche Öffnungen (86) für den Austritt von Kabeln des elektrischen Kabelstrangs (10) hat.

5. Verfahren zur Montage eines elektrischen Kabelstrangs in einem Schienenfahrzeug-Triebwagen (M), der aufweist einen zentralen Korridor (1), der zwei seitliche Technik-Abteile (3, 4) trennt, eine Kastenstruktur (12) und eine Dachstruktur (6), **dadurch gekennzeichnet, dass** es Schritte aufweist bestehend aus:
- a) Montieren des elektrischen Kabelstrangs (10) in einem Kabelkanal (80) eine Einrichtung zum Halten (8),
- b) Montieren der Einrichtung zum Halten (8), die mit dem elektrischen Kabelstrang (10) ausgestattet ist, unter der Dachstruktur (6) zwischen den beiden seitlichen Technik-Abteilen (3,4) und um sie unter der Kastenstruktur (12) zu befestigen,
c) Verbinden des elektrischen Kabelstrangs (10) mit elektrischen Einrichtungen des Triebwagens (M), die in den seitlichen Abteilen (3, 4) vorliegen.

6. Verfahren zur Montage gemäß Anspruch 5, **dadurch gekennzeichnet, dass** die Montage des elektrischen Kabelstrangs (10) im Schritt (a) am Boden realisiert ist.

## Claims

1. Railway vehicle locomotive (M), comprising:
- a central corridor (1) which extends along a longitudinal axis (X) of the locomotive (M) and separates two lateral service compartments (3, 4),
- a roof structure (6) which extends above the central corridor (1) and the lateral service compartments (3, 4),
- a body structure (12) which supports the roof structure (6),
**characterised in that** it comprises a cable harness support assembly (8) which is fixed beneath the body structure (12) above the central corridor (1) and beneath the roof structure (6), and at least one cable harness (10) fixed in the support assembly (8),
**in that** the support assembly (8) has open longitudinal sides through which cables of the cable harness (10) are guided towards the lateral service compartments (3, 4), and
**in that** the support assembly (8) is accessible through upper and lower longitudinal sides.

2. Locomotive according to claim 1, **characterised in that** the cable harness (10) mounted in the support assembly (8) is a low-voltage cable harness.

3. Locomotive according to any one of the preceding claims, **characterised in that** the support assembly (8) comprises a channel (80) which receives the cable harness (10), and fixing elements (82) fixed to the body structure (12) of the locomotive (M).

4. Locomotive according to claim 3, **characterised in that** the cable harness (10) is inserted into a duct (84) mounted in the channel (80), the duct (84) having lateral outlet openings (86) for the cables of the cable harness (10).

5. Method for mounting a cable harness in a railway vehicle locomotive (M) comprising a central corridor (1) which separates two lateral service compartments (3, 4), a body structure (12) and a roof structure (6), **characterised in that** it comprises steps consisting in:
- a) mounting the cable harness (10) in a channel (80) of a support assembly (8);
- b) mounting the support assembly (8) equipped with the cable harness (10) beneath the roof structure (6) between the two lateral service compartments (3, 4) and fixing it beneath the body structure (12);
- c) connecting the cable harness (10) to pieces of electrical equipment of the locomotive (M) that are located in the lateral compartments (3, 4).

6. Mounting method according to claim 5, **characterised in that** the mounting of the cable harness (10) in step a) is carried out on the ground.
